# EUROPÄISCHE PATENTSCHRIFT

(11) **EP 1 825 050 B1**
(45) Veröffentlichungstag und Bekanntmachung des Hinweises auf die Patenterteilung: **23.06.2010**
(21) Anmeldenummer: 05803765.6
(22) Anmeldetag: 11.11.2005
(51) Int. Cl.: D06M 13/292, D06M 15/233, D01F 1/07, C09D 17/00, C09D 11/00

(54) **WASSERBASIERENDE FLAMMSCHUTZMITTELDISPERSIONEN AUF ACRYLATBASIS**
WATER- AND ACRYLATE-BASED FLAMEPROOFING DISPERSION
DISPERSIONS AQUEUSES D'AGENT IGNIFUGE A BASE D'ACRYLATE

(30) Priorität: 09.12.2004 DE 102004059221
(43) Veröffentlichungstag der Anmeldung: 29.08.2007
(73) Patentinhaber: Clariant Produkte (Deutschland) GmbH, 65929 Frankfurt am Main (DE)
(72) Erfinder: HARZ, Andreas, 65824 Schwalbach (DE); MÜLLER, Olaf, 61462 Königstein (DE)
(74) Vertreter: Hütter, Klaus
(86) Internationale Anmeldenummer: PCT/EP2005/012134
(87) Internationale Veröffentlichungsnummer: WO 2006/061079

(56) Entgegenhaltungen:
- WO-A-03/008510
- DD-A7- 299 479
- DE-A1- 2 532 521
- DE-A1- 4 128 638

## Beschreibung

Gegenstand der vorliegenden Erfindung sind wasserbasierende Flammschutzmittelpräparationen der Dioxaphosphorinane, Verfahren zu ihrer Herstellung, ihre Verwendung zur Flammschutzausrüstung von natürlichen und synthetischen Fasermaterialien.
Um eine zufrieden stellende Flammschutzausrüstung von beispielsweise Viskosefasern zu erzielen, müssen die verwendeten Flammschutzmittel hohen Anforderungen genügen, insbesondere im Hinblick auf Reinheit, Partikelfeinheit, Lagerstabilität, Viskosität, Oberflächenspannung und Leitfähigkeit. Insbesondere werden sehr hohe Anforderungen an die Partikelfeinheit und Stabilität gestellt, damit es beim Spinnprozess von hochwertigen feinen bis sehr feinen Viskosefasern nicht zu Faser- und Filamentbrüchen, Titerschwankungen, Schwankungen der Faserfeinheit oder zu Düsenverstopfungen kommt, welche eine schlechtere Qualität des Endprodukts verursachen.

Bislang bekannte Flammschutzmittelpräparationen, wie z.B. in DE-41 28 638 A1 beschrieben, erfüllen oftmals nicht mehr die von der Viskoseindustrie gestellten Anforderungen, da sie Defizite in der Feinverteilung und der Temperatur- und Lagerstabilität, insbesondere bei der Rekristallisationsbeständigkeit, aufweisen.

Es bestand daher die Aufgabe, Flammschutzmittelpräparationen zur Verfügung zu stellen, die die vorstehend genannten Anforderungen hinsichtlich Feinverteilung, Temperatur- und Lagerstabilität und insbesondere einer verbesserten Rekristallisationsbeständigkeit erfüllen.

Diese Aufgabe konnte überraschenderweise dadurch gelöst werden, dass das Flammschutzmittel mit einem speziellen, nachstehend definierten wasserlöslichen Acrylatharz, ggf. in Kombination mit einem Dispergierhilfsmittel dispergiert wird.

Gegenstand der vorliegenden Erfindung ist eine wässrige Dispersion enthaltend
a) ein Flammschutzmittel der allgemeinen Formel (1) 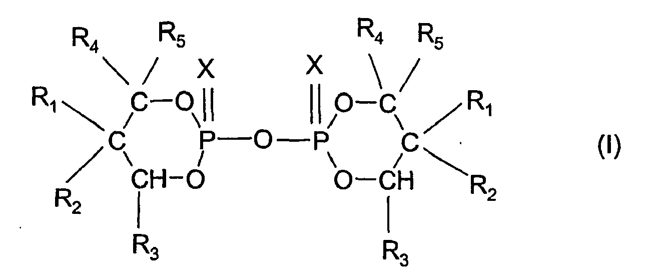 worin
   - R₁: Wasserstoff, C₁-₄-Alkyl, -CH₂Cl, -CH₂Br, -CH₂O-C₁₋₄Alkyl oder Phenyl,
   - R₂: Wasserstoff, C₁₋₄-Alkyl, -CH₂Cl, -CH₂Br oder -CH₂O-C₁₋₄-Alkyl, oder
   - R₁ und R₂: zusammen mit dem an sie gebundenen Ring-Kohlenstoffatom Cyclohexyliden, Cyclohexenyliden oder 3,4-Dibromcyclohexyliden,
   - R₃ und R₅: unabhängig voneinander Wasserstoff oder C₁₋₄-Alkyl,
   - R₄: Wasserstoff oder Methyl und
   - X: Sauerstoff oder Schwefel
   bedeuten, und
b) ein Acrylatcopolymer, das im wesentlichen aus 50 bis 80 Mol-% Monoalkenylaromaten und 20 bis 50 Mol-% Acrylaten besteht, und eine mittlere Molmasse Mᵥ zwischen 1000 und 50.000 g/mol hat.

Die R₁-Reste bedeuten vorzugsweise Methyl, Ethyl, Propyl, Chlormethyl, Brommethyl oder Phenyl.
Die R₂-Reste sind vorzugsweise Methyl, Ethyl, Propyl, Chlormethyl oder Brommethyl.
Eine besonders bevorzugte Verbindung der Formel (I) entspricht der Formel (Ia)

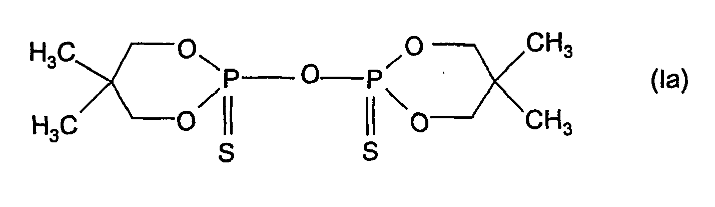

Die Verbindungen der Formel (I) und (Ia) sind bekannt und lassen sich auf bekannte Weise leicht herstellen.

Unter Monoalkenylaromaten werden insbesondere Monomere aus der Gruppe Styrol, α-Methyl-styrol, Vinyltoluol, tert.-Butyl-styrol, o-Chlor-styrol, sowie Gemische davon, verstanden.

Unter Acrylaten werden Monomere aus der Gruppe Acrylsäure, Methacrylsäure sowie Ester der Acryl- oder Methacrylsäure verstanden. Beispiele sind: Methylmethacrylat, Ethylmethacrylat, n-Propylmethacrylat, n-Butylmethacrylat, Isopropyl-methacrylat, Isobutyl-methacrylat, n-Amyl-methacrylat, n-Hexylmethacrylat, Iso-amyl-methacrylat, 2-Hydroxyethyl-methacrylat, 2-Hydroxypropylmethacrylat, N,N-Dimethylaminoethyl-methacrylat, N,N-Diethylaminoethylmethacrylat, t-Butylaminoethyl-methacrylat, 2-Sulfoethyl-methacrylat, Trifluorethylmethacrylat, Glycidyl-methacrylat, Benzyl-methacrylat, Allyl-methacrylat, 2-n-Butoxyethyl-methacrylat, 2-Chlorethyl-methacrylat, sec-Butyl-methacrylat, tert.-Butyl-methacrylat, 2-Ethylbutyl-methacrylat, Cinnamyl-methacrylat, Crotylmethacrylat, Cyclohexyl-methacrylat, Cyclopentyl-methacrylat, 2-Ethoxyethylmethacrylat, Furfuryl-methacrylat, Hexafluorisopropyl-methacrylat, Methallylmethacrylat, 3-Methoxybutyl-methacrylat, 2-Methoxybutyl-methacrylat, 2-Nitro-2-methylpropyl-methacrylat, n-Octylmethacrylat, 2-Ethylhexyl-methacrylat, 2-Phenoxyethyl-methacrylat, 2-Phenylethyl-methacrylat, Phenyl-methacrylat, Propargyl-methacrylat, Tetrahydrofurfuryl-methacrylat und Tetrahydropyranylmethacrylat.

Das Acrylatharz besteht vorzugsweise aus 60 bis 70 Mol-% Monoalkenylaromaten und 30 bis 40 Mol-% Acrylaten. Besonders bevorzugt sind Acrylatharze aus den Monomeren Styrol und (Meth)acrylsäure.

Die mittlere Molmasse, bestimmt durch Gelpermeationschromatographie, beträgt vorzugsweise 5000 bis 25000 g/mol. Die erfindungsgemäß verwendeten Acrylatharze haben bevorzugt eine Säurezahl zwischen 110 und 250, insbesondere zwischen 190 und 220 mg KOH/g Acrylatharz; weiterhin bevorzugt eine Glasübergangstemperatur von 110 bis 140°C, insbesondere 120 bis 130°C; weiterhin bevorzugt eine Polydispersität von 1,5 bis 2,5, insbesondere von 2,0 bis 2,4;
weiterhin bevorzugt eine Dichte bei 25°C von 1,05 bis 1,3 g/cm^{3;}
insbesondere von 1,1 bis 1,2 g/cm³;
weiterhin bevorzugt einen Schmelzbereich von 120 bis 160°C.

Das Acrylatharz wird zweckmäßigerweise in alkalisch wässriger Lösung oder ammoniakalischer Lösung eingesetzt, vorzugsweise als 1 bis 35 gew.-%ige, insbesondere 5 bis 30 gew.-%ige, Lösung.

Die vorstehend beschriebenen Acrylatharze können gemäß US 4,529,787 hergestellt werden.

Das erfindungsgemäß eingesetzte Acrylatharz kann geringe Mengen, wie z.B. 0,5 bis 2 Mol-%, einer zur Polymerisation befähigten oberflächenaktiven Verbindung im Copolymer enthalten.

Bereits durch die Verwendung des Acrylatharzes erhält man vorzüglich lagerbeständige Flammschutzmittelpräparationen, jedoch verbessert sich die Rekristallisations-beständigkeit durch die Zugabe eines weiteren Dispergierhilfsmittels der Formel (3)

R - O - (CH₂-CH₂-O)ₘ - CH₂ - COOM (3),

worin
R ein C₁₀-C₂₀-Alkylrest oder ein C₁₀-C₂₀-Alkenylrest,
m eine Zahl von 1 bis 15 und
M ein einwertiges Kation bedeutet;
oder aus der Gruppe der Naphtalinsulfonsäure-Formaldehyd-Polykondensate, vorzugsweise als Natriumsalz, und/oder aus der Gruppe der Tristyrylphenolethoxilate.

Die erfindungsgemäße Flammschutzmittel-Präparation kann weiterhin Retentionsmittel enthalten, bevorzugt aus der Klasse der α-Methyl ω-Hydroxy-Polyethylenglykolether mit einer mittleren Molmasse von 250 bis 1000 g/mol. Retentionsmittel verzögern das An- und Eintrocknen der Dispersion.
Das Dispergierhilfsmittel der Formel (3) ist vorzugsweise eine Verbindung, worin R C₁₂-C₁₈-Alkyl oder C₁₂-C₁₈-Alkenyl bedeutet, insbesondere C₁₃-C₁₆-Alkyl oder -Alkenyl.
Die Zahl m ist vorzugsweise 1 bis 10.
Das einwertige Kation M ist vorzugsweise Wasserstoff, ein Alkalimetall, insbesondere Na, oder Ammonium.
Beispiele für Verbindungen der Formel (3) sind:
(C₁₃-C₁₅)-Alkyl-O-(CH₂CH₂-O)_{9,5}-CH₂COONa,
C₁₆H₃₃-O-(CH₂CH₂O)CH₂COONa,
C₁₈H₃₅-O-(CH₂CH₂O)CH₂COONa, 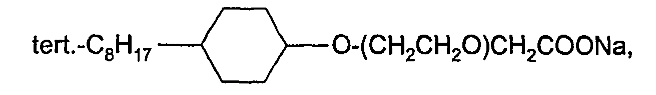
C₁₈H₃₅-O-(CH₂CH₂O)₈-CH₂COONa,
C₁₈H₃₇-O-(CH₂CH₂O)-CH₂COONa.

Derartige Verbindungen sind aus CH-A-324 665 und CH-A-283 986 bekannt.

Das Gewichtsverhältnis zwischen dem Flammschutzmittel der Formel (I) und dem Acrylat-Copolymer beträgt vorzugsweise 1 : 0,1 bis 1 : 1, insbesondere 1 : 0,15 bis 1 : 0,5.
Das bevorzugte Verhältnis von Flammschutzmittel und Dispergiermittel der Formel (3), sofern vorhanden, ist 1 ; 0,05 bis 1 ; 1 insbesondere 1 : 0,05 bis 1 : 0,5.

Bevorzugte Flammschutzmittel-Präparationen bestehen aus
a) 5 bis 50 Gew.-%, vorzugsweise 20 bis 45 Gew.-%, Flammschutzmittel der Formel (I),
b) 0,25 bis 20 Gew.-%, vorzugsweise 1 bis 10 Gew.-%, des Acrylat-Copolymers,
c) 0 bis 12 Gew.-%, vorzugsweise 1 bis 12 Gew.-%, insbesondere 2 bis 8 Gew.-% einer Verbindung der Formel (3), und/oder aus der Gruppe der Naphtalinsulfonsäure-Formaldehyd-Polykondensate, und/oder aus der Gruppe der Tristyrylphenolethoxilate;
d) 5 bis 60 Gew.-%, vorzugsweise 10 bis 40 Gew.-% Wasser,
e) 0 bis 15 Gew.-%, vorzugsweise 5 bis 9 Gew.-%, eines Retentionsmittels,
g) 0 bis 10 Gew.-%, vorzugsweise 0,5 bis 9,5 Gew.-%, weiterer üblicher Zusatzstoffe,
   jeweils bezogen auf das Gesamtgewicht der Flammschutzmittelpräparation.

Zur Herstellung der Flammschutzmittel-Präparationen benutztes Wasser wird vorzugsweise in Form von destilliertem oder entsalztem Wasser eingesetzt.

Weitere übliche Zusatzstoffe sind beispielsweise Konservierungsmittel, kationische, anionische oder nichtionogene oberflächenaktive Substanzen (Tenside und Netzmittel), sowie Mittel zur Regulierung der Viskosität, z.B. Polyvinylalkohol, Cellulosederivate, oder wasserlösliche natürliche oder künstliche Harze als Filmbildner bzw. Bindemittel zur Erhöhung der Haft- und Abriebfestigkeit, sowie Amine, wie z.B. Ethanolamin, Diethanolamin, Triethanolamin, N,N-Dimethylethanolamin oder Diisopropylamin, die hauptsächlich zur Erhöhung des pH-Wertes der Flammschutzmittelpräparation dienen.

Gegenstand der vorliegenden Erfindung ist auch ein Verfahren zur Herstellung der erfindungsgemäßen Flammschutzmittelpräparationen, **dadurch gekennzeichnet, dass** man das Flammschutzmittel in der Acrylatharzlösung und ggf. dem Dispergierhilfsmittel der Formel (3) mit Hilfe eines Dispergieraggregates, vorzugsweise einer Rührwerkskugelmühle, die insbesondere mit einer Rührwerksumfangsgeschwindigkeit von über 12 m/s betrieben wird und unter Einwirkung von nichtmetallischen Mahlkörpern vom Durchmesser kleiner oder gleich 1 mm, in Gegenwart von Wasser fein verteilt. Die übrigen Zusatzstoffe können bei der Feinverteilung zugegen sein und/oder anschließend zugegeben werden. Das Acrylatharz wird zweckmäßigerweise als wässrige Lösung, wie vorstehend beschrieben, eingesetzt. Es kann auch eine gewöhnliche Rührwerkskugelmühle eingesetzt werden, jedoch muss eine gröbere Korngrößenverteilung sowie eine längere Verarbeitungszeit in Kauf genommen werden.

Gegenstand der Erfindung ist auch die Verwendung der erfindungsgemäßen Dispersionen zum Ausrüsten von Celluloseregenerat. Die regenerierte Cellulose, insbesondere Xanthogenat, wird in gelöster Form, z.B. vor dem Verspinnen, mit den erfindungsgemäßen Dispersionen vermischt. Das Mischungsverhältnis wird im Allgemeinen zwischen 10 und 40 Teilen der erfindungsgemäßen Flammschutzmittelpräparation pro 100 Teile reiner, regenerierter Cellulose liegen.

Die erfindungsgemäßen Flammschutzmittelpräparationen können auch in Kombination mit Pigmenten, Pigmentpräparationen und/oder Farbstoffen eingesetzt werden. Die Zugabe erfolgt als Spinnfärbung wie vorstehend beschrieben für die Masseflammschutzausrüstung oder Oberflächenbehandlung von cellulosischen Materialien, wie Stapelfasern, Filamenten, Monofilen, Non wovens, Wursthüllen, Cellophan, Schwammtüchern (Mischungen bzw. Kombinationen aus zellulosischen und/oder tierischen, pflanzlichen und/oder synthetischen Fasern), sowie pflanzlichen, tierischen oder synthetischen Fasern.

Des weiteren sind die erfindungsgemäßen Präparationen geeignet zur Oberflächenbeschichtung oder zur Masseflammschutzausrüstung alleine oder in Kombination mit Farbmitteln, wie Pigmenten, Pigment-Präparationen und/oder Farbstoffen, für Schuhcreme, Kerzen, Wachsmalstiften, Knetmasse, Kosmetika, Anstrich- und Dispersionsfarben, Dispersionslacken, für Druckfarben, beispielsweise Textildruck-, Flexodruck- oder Tiefdruckfarben, für Tapeten und Tapetenfarben, für Holzschutzsysteme, für Lacke, für Saatgut, für Glasflaschen, für die Massefärbung von Dachziegeln, für Putze, für Holzbeizen, für Papiermassen, für Buntstiftminen, Faserschreiber, Tuschen, Tinten, Pasten für Kugelschreiber, Kreiden, Wasch- und Reinigungsmittel, Schuhpflegemittel, Latex-Produkten, Schleifmitteln, sowie von Kunststoffen und hochmolekularen Materialien, sowie als Flammschutzmittel in elektrophotographischen Tonern und Entwicklern, wie z.B. Ein- oder Zweikomponentenpulvertonern, Magnettonern, Flüssigtonern, Polymerisationstonern sowie weiteren Spezialtonern, als Flammschutzmittel in Ink-Jet-Tinten.

Des weiteren sind die erfindungsgemäßen Präparationen geeignet zur Oberflächenbeschichtung oder zur Masseflammschutzausrüstung von Gegenständen aus beispielsweise Metall, Holz, Kunststoff, Glas, Keramik, Beton, Textilmaterial, Papier oder Kautschuk.

Als Farbmittel kommen organische und anorganische Pigmente sowie polymerlösliche, -teillösliche oder -unlösliche Farbstoffe in Betracht. Als organische Pigmente kommen Monoazo-, Disazo-, verlackte Azo-, β-Naphthol-, Naphthol AS-, Benzimidazolon-, Disazokondensations-, Azo-Metallkomplex-Pigmente und polycyclische Pigmente wie z.B. Phthalocyanin-, Chinacridon-, Perylen-, Perinon-, Thioindigo-, Anthanthron-, Anthrachinon-, Flavanthron-, Indanthron-, Isoviolanthron-, Pyranthron-, Dioxazin-, Chinophthalon-, Isoindolinon-, Isoindolin- und Diketopyrrolopyrrol-Pigmente oder Ruße in Betracht. Geeignete anorganische Pigmente sind beispielsweise Titandioxide, Zinksulfide, Eisenoxide, Chromoxide, Ultramarin, Nickel- oder Chromantimontitanoxide, Cobaltoxide, Mischoxide des Cobalts und Aluminiums, Bismutvanadate sowie Verschnittpigmente.
Als organische Farbstoffe kommen Säurefarbstoffe, Direktfarbstoffe, Schwefelfarbstoffe und deren Leukoform, Metallkomplexfarbstoffe oder Reaktivfarbstoffe in Betracht.

### Beispiele

In den nachstehenden Beispielen wird für die Acrylatlösung ein Acrylatharz verwendet, das durch folgende Merkmale gekennzeichnet ist:
Copolymer aus 60 - 70 Mol-% Monostyrol, 30 - 40 Mol-% Acrylsäure.

| | |
|---|---|
| Spezif. Masse: | 1150 kg/m³ |
| Säurezahl: | 214 |
| Glasübergangstemperatur: | 128°C |
| Molmasse: | 17 250 g/mol |
| Schmelzbereich: | 140-150°C |
| Polydispersität: | 2,3 |

Die Acrylatlösung selbst besteht aus 25 Gew.-% des Acrylats, 4 Gew.-% Ammoniak und 71 Gew.-% Wasser.

### Beispiel 1

39 Teile Flammschutzmittel der Formel (1 a)
10 Teile Acrylatlösung
2 Teile Dispergiermittel: R-O-(CH₂CH₂O)_{9,5}-CH₂COONa mit R = C₁₃-C₁₅-Alkyl
0,8 Teile Konservierungsmittel
und 48,2 Teile Wasser werden mit einem Dissolver homogenisiert.
Im Anschluss wird die Suspension mit einer Rührwerkskugelmühle (Typ Getzmann Dispermat) mit Glasmahlkörpern, Durchmesser -1 mm, gemahlen. Die erhaltene Flammschutzmittel-Präparation kann mit Wasser auf niedrigeren Wirkstoffgehalt eingestellt werden.
Die Flammschutzmittelpräparation besitzt eine ausgezeichnete Fliessfähigkeit, Viskositätsstabilität und eine sehr gute Rekristallisationsstabilität bei Lagerung über einen Monat bei Raumtemperatur und 50°C.

### Beispiel 2

Eine Präparation, enthaltend
39 Teile Flammschutzmittel der Formel (1a)
10 Teile Acrylatlösung
0,8 Teile Konservierungsmittel
50,2 Teile Wasser
wird, wie in Beispiel 1 beschrieben, hergestellt.

### Beispiel 3

Eine Präparation, enthaltend
39 Teile Flammschutzmittel der Formel (1a)
10 Teile Acrylatlösung
6 Teile Naphtalinsulfonsäure-Formaldehyd-Polykondensat als Natriumsalz
0,8 Teile Konservierungsmittel
44,2 % Wasser
wird, wie in Beispiel 1 beschrieben, hergestellt.

### Beispiel 4

Eine Präparation, enthaltend
45 Teile Flammschutzmittel der Formel (1 a)
10 Teile Acrylatlösung
12 Teile Dispergiermittel: C₁₈H₃₅O(CH₂CH₂O)₁₂CH₂COONa
7,5 Teile α-Methyl ω-Hydroxy-Polyethylenglykolether
0,9 Teile Konservierungsmittel
24,6 Teile Wasser
wird, wie in Beispiel 1 beschrieben, hergestellt.

### Anwendungsbeispiel

15,8 Teile einer gemäß Beispiel 1 hergestellten Dispersion werden unter Rühren in 200 Teile einer 9 %igen Cellulose-Xanthogenatlösung eingebracht und durch Düsen in wässriges Fällungsbad, das pro Liter 125 g H₂SO₄, 240 g Na₂SO₄ (wasserfrei) und 12 g ZnSO₄ (wasserfrei) enthält, versponnen. Das so erhaltene Filament wird gründlich gewaschen, getrocknet, und zu einem Gewirke verarbeitet. Dieses Gewirke wird einem Entflammbarkeitstest (Methode Fenimorc und Martin, Modern Pastics, Nov. 1966, bzw. LOI-Wert-Bestimmung, ASTM D2863) unterworfen. Der Vergleich mit einem nicht erfindungsgemäß behandelten Cellulose-Gewirke zeigt im Vergleich einen LOI-Wert von ca. 18, während das erfindungsgemäß behandelte Gewirke einen LOI-Wert von 27,5 aufweist.

## Patentansprüche

1. Wässrige Dispersion, enthaltend
a) ein Flammschutzmittel der allgemeinen Formel (I) 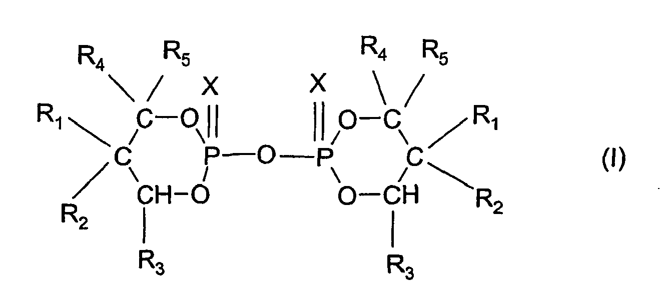 worin
R₁ Wasserstoff, C₁₋₄-Alkyl, -CH₂Cl, -CH₂Br, -CH₂O-C₁₋₄-Alkyl oder Phenyl,
R₂ Wasserstoff, C₁₋₄-Alkyl, -CH₂Cl, -CH₂Br oder -CH₂O-C₁₋₄-Alkyl, oder
R₁ und R₂ zusammen mit dem an sie gebundenen Ring-Kohlenstoffatom Cyclohexyliden, Cyclohexenyliden oder 3,4-Dibromcyclohexyliden,
R₃ und R₅ unabhängig voneinander Wasserstoff oder C₁₋₄-Alkyl,
R₄ Wasserstoff oder Methyl und
X Sauerstoff oder Schwefel
bedeuten, und
b) ein Acrylatcopolymer, das im wesentlichen aus 50 bis 80 Mol-% Monoalkenylaromaten und 20 bis 50 Mol-% Acrylaten besteht, und eine mittlere Molmasse Mᵥ zwischen 1000 und 50.000 g/mol hat.

2. Dispersion nach Anspruch 1, **dadurch gekennzeichnet, dass** die R₁-Reste Methyl, Ethyl, Propyl, Chlormethyl, Brommethyl oder Phenyl bedeuten.

3. Dispersion nach Anspruch 1 oder 2, **dadurch gekennzeichnet, dass** die R₂-Reste Methyl, Ethyl, Propyl, Chlormethyl oder Brommethyl bedeuten.

4. Dispersion nach einem oder mehreren der Ansprüche 1 bis 3, **dadurch gekennzeichnet, dass** das Flammschutzmittel der Formel (Ia) entspricht

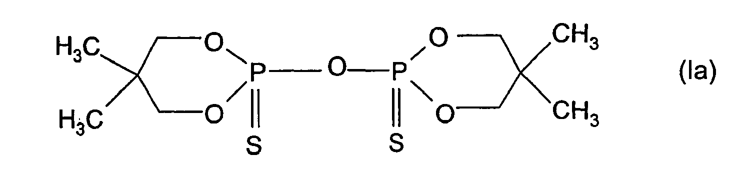

5. Dispersion nach einem oder mehreren der Ansprüche 1 bis 4, **dadurch gekennzeichnet, dass** Acrylat ein Copolymer aus 60 bis 70 Mol-% Monoalkenylaromaten und 30 bis 40 Mol-% Acrylaten ist.

6. Dispersion nach einem oder mehreren der Ansprüche 1 bis 5, **dadurch gekennzeichnet, dass** der Monoalkenylaromat ein Monomer aus der Gruppe Styrol, α-Methyl-styrol, Vinyltoluol, tert.-Butyl-styrol, o-Chlor-styrol oder eine Kombination davon ist.

7. Dispersion nach einem oder mehreren der Ansprüche 1 bis 6, **dadurch gekennzeichnet, dass** das Acrylat-Copolymer aus den Monomeren Styrol, Acrylsäure und/oder Methacrylsäure besteht.

8. Dispersion nach einem oder mehreren der Ansprüche 1 bis 7, **dadurch gekennzeichnet, dass** das Gewichtsverhältnis zwischen dem Flammschutzmittel der Formel (I) und dem Acrylat-Copolymer 1: 0,1 bis 1:1 beträgt.

9. Dispersion nach einem oder mehreren der Ansprüche 1 bis 8, **dadurch gekennzeichnet, dass** zusätzlich ein Dispergierhilfsmittel der Formel (3)
R - O - (CH₂-CH₂-O)ₘ - CH₂ - COOM (3),
worin
R ein C₁₀-C₂₀-Alkylrest oder ein C₁₀-C₂₀-Alkenylrest,
m eine Zahl von 1 bis 15 und
M ein einwertiges Kation bedeutet;
und/oder aus der Gruppe der Naphtalinsulfonsäure-Formaldehyd-Polykondensate, und/oder aus der Gruppe der Tristyrylphenolethoxilate enthalten ist.

10. Dispersion nach einem oder mehreren der Ansprüche 1 bis 9, bestehend aus
a) 5 bis 50 Gew.-% Flammschutzmittel der Formel (I),
b) 0,25 bis 20 Gew.-% des Acrylat-Copolymers,
c) 0 bis 12 Gew.-% einer Verbindung der Formel (3), und/oder aus der Gruppe der Naphtalinsulfonsäure-Formaldehyd-Polykondensate, und/oder aus der Gruppe der Tristyrylphenolethoxilate;
d) 5 bis 60 Gew.-% Wasser,
e) 0 bis 15 Gew.-% eines Retentionsmittels,
g) 0 bis 10 Gew.-% weiterer üblicher Zusatzstoffe,
jeweils bezogen auf das Gesamtgewicht der Dispersion.

11. Dispersion nach einem oder mehreren der Ansprüche 1 bis 10, bestehend aus
a) 20 bis 45 Gew.-% Flammschutzmittel der Formel (I),
b) 1 bis 10 Gew.-% des Acrylat-Copolymers,
c) 1 bis 12 Gew.-% einer Verbindung der Formel (3), und/oder aus der Gruppe der Naphtalinsulfonsäure-Formaldehyd-Polykondensate, und/oder aus der Gruppe der Tristyrylphenolethoxilate;
d) 10 bis 40 Gew.-% Wasser,
e) 5 bis 9 Gew.-% eines Retentionsmittels,
g) 0,5 bis 9,5 Gew.-% weiterer üblicher Zusatzstoffe,
jeweils bezogen auf das Gesamtgewicht der Dispersion.

12. Verfahren zur Herstellung einer Dispersion nach einem oder mehreren der Ansprüche 1 bis 11, **dadurch gekennzeichnet, dass** man das Flammschutzmittel
(a) in einer Lösung des Acrylat-Copolymers (b) und gegebenenfalls den Komponenten (c), (e) und/oder (g) mit Hilfe eines Dispergieraggregates in Gegenwart von Wasser fein verteilt.

13. Verwendung einer Dispersion nach einem oder mehreren der Ansprüche 1 bis11 zur Masseflammschutzausrüstung oder Oberflächenbehandlung von cellulosischen Materialien, wie Stapelfasern, Filamenten, Monofilen, Non wovens, Wursthüllen, Cellophan, Kombinationen aus cellulosischen und/oder tierischen, pflanzlichen und/oder synthetischen Fasern, sowie pflanzlichen, tierischen oder synthetischen Fasern.

14. Verwendung nach Anspruch 13 zum Ausrüsten von Celluloseregenerat.

## Claims

1. An aqueous dispersion containing
a) a flame retardant of the general formula (I) 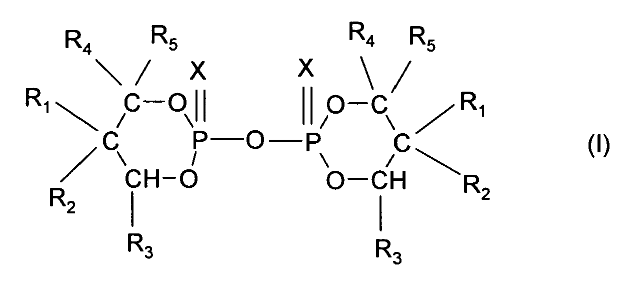 where
R₁ is hydrogen, C₁₋₄-alkyl, -CH₂Cl, -CH₂Br, -CH₂O-C₁₋₄-alkyl or phenyl,
R₂ is hydrogen, C₁₋₄-alkyl, -CH₂Cl, -CH₂Br or -CH₂O-C₁₋₄-alkyl, or
R₁ and R₂ combine with the connecting ring carbon atom to form cyclohexylidene, cyclohexenylidene or 3,4-dibromocyclohexylidene,
R₃ and R₅ are independently hydrogen or C₁₋₄-alkyl,
R₄ is hydrogen or methyl, and
X is oxygen or sulfur,
and
b) an acrylate copolymer consisting essentially of 50 to 80 mol% of monoalkenyl aromatics and 20 to 50 mol% of acrylates and having an average molar mass Mᵥ between 1000 and 50 000 g/mol.

2. The dispersion according to claim 1 wherein the R₁ radicals are methyl, ethyl, propyl, chloromethyl, bromomethyl or phenyl.

3. The dispersion according to claim 1 or 2 wherein the R₂ radicals are methyl, ethyl, propyl, chloromethyl or bromomethyl.

4. The dispersion according to one or more of claims 1 to 3 wherein the flame retardant conforms to the formula (Ia)

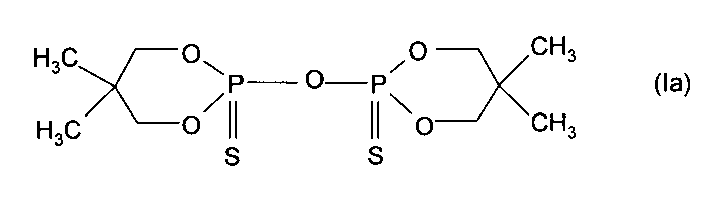

5. The dispersion according to one or more of claims 1 to 4 wherein acrylate is a copolymer of 60 to 70 mol% of monoalkenyl aromatics and 30 to 40 mol% of acrylates.

6. The dispersion according to one or more of claims 1 to 5 wherein the monoalkenyl aromatic is a monomer selected from the group consisting of styrene, α-methylstyrene, vinyltoluene, tert-butylstyrene, o-chlorostyrene or a combination thereof.

7. The dispersion according to one or more of claims 1 to 6 wherein the acrylate copolymer consists of the monomers styrene, acrylic acid and/or methacrylic acid.

8. The dispersion according to one or more of claims 1 to 7 wherein the weight ratio between the flame retardant of the formula (I) and the acrylate copolymer is in the range from 1:0.1 to 1:1.

9. The dispersion according to one or more of claims 1 to 8 wherein a dispersing assistant of the formula (3)
R - O - (CH₂-CH₂-O)ₘ - CH₂ - COOM (3),
where
R is a C₁₀-C₂₀-alkyl radical or a C₁₀-C₂₀-alkenyl radical,
m is from 1 to 15 and
M is a univalent cation;
and/or from the group of the naphthalenesulfonic acid-formaldehyde polycondensates,
and/or from the group of the tristyrylphenol ethoxylates is additionally present.

10. The dispersion according to one or more of claims 1 to 9, consisting of
a) 5% to 50% by weight of flame retardant of the formula (I),
b) 0.25% to 20% by weight of the acrylate copolymer,
c) 0% to 12% by weight of a compound of the formula (3) and/or from the group of the naphthalenesulfonic acid-formaldehyde polycondensates and/or from the group of the tristyrylphenol ethoxylates;
d) 5% to 60% by weight of water,
e) 0% to 15% by weight of a retention agent,
g) 0% to 10% by weight of further customary additives,
all based on the total weight of the dispersion.

11. The dispersion according to one or more of claims 1 to 10, consisting of
a) 20% to 45% by weight of flame retardant of the formula (I),
b) 1 % to 10% by weight of the acrylate copolymer,
c) 1 % to 12% by weight of a compound of the formula (3) and/or from the group of the naphthalenesulfonic acid-formaldehyde polycondensates and/or from the group of the tristyrylphenol ethoxylates;
d) 10% to 40% by weight of water,
e) 5% to 9% by weight of a retention agent,
g) 0.5% to 9.5% by weight of further customary additives,
all based on the total weight of the dispersion.

12. A process for producing a dispersion according to one or more of claims 1 to 11, which comprises finely dispersing the flame retardant (a) in a solution of the acrylate copolymer (b) and if appropriate the components (c), (e) and/or (g) by means of a dispersing assembly in the presence of water.

13. The use of a dispersion according to one or more of claims 1 to 11 for bulk flame retardant finishing or surface treatment of cellulosic materials, such as staple fibers, filaments, monofils, non wovens, sausage casings, cellophane, combinations of cellulosic and/or animal, vegetable and/or synthetic fibers, and also vegetable, animal or synthetic fibers.

14. The use according to claim 13 for finishing regenerated cellulose.

## Revendications

1. Dispersion aqueuse, contenant :
a) un agent ignifuge de formule générale (I) 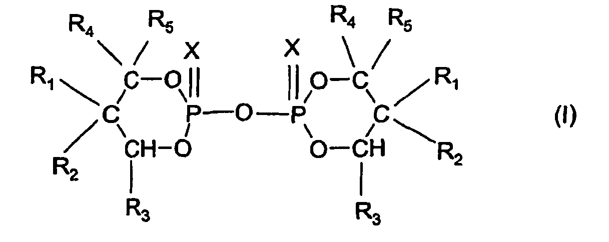 où
R₁ signifie hydrogène, C₁₋₄-alkyle, -CH₂Cl, -CH₂Br, -CH₂O-C₁₋₄-alkyle ou phényle,
R₂ signifie hydrogène, C₁₋₄-alkyle, -CH₂Cl, -CH₂Br ou -CH₂O-C₁₋₄-alkyle, ou
R₁ et R₂ signifient, ensemble avec l'atome de carbone auquel ils sont liés, cyclohexylidène, cyclohexénylidène ou 3,4-dibromocyclohexylidène,
R₃ et R₅ signifient, indépendamment l'un de l'autre, hydrogène ou C₁₋₄-alkyle,
R₄ signifie hydrogène ou méthyle, et
X signifie oxygène ou soufre
et
b) un copolymère d'acrylate, qui est constitué essentiellement par 50 à 80% en mole de monoalcényl-aromatiques et par 20 à 50% en mole d'acrylates et qui présente une masse molaire moyenne Mᵥ entre 1000 et 50 000 g/mole.

2. Dispersion selon la revendication 1,
**caractérisée en ce que** les radicaux R₁ signifient méthyle, éthyle, propyle, chlorométhyle, bromométhyle ou phényle.

3. Dispersion selon la revendication 1 ou 2,
**caractérisée en ce que** les radicaux R₂ signifient méthyle, éthyle, propyle, chlorométhyle ou bromométhyle.

4. Dispersion selon l'une ou plusieurs des revendications 1 à 3, **caractérisée en ce que** l'agent ignifuge correspond à la formule (Ia)

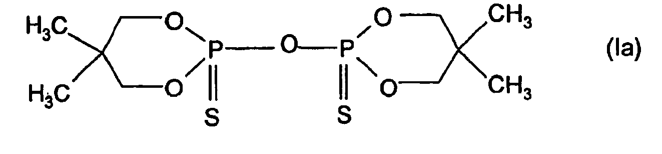

5. Dispersion selon l'une ou plusieurs des revendications 1 à 4, **caractérisée en ce que** l'acrylate est un copolymère constitué par 60 à 70% en mole de monoalcényl-aromatiques et 30 à 40% en mole d'acrylates.

6. Dispersion selon l'une ou plusieurs des revendications 1 à 5, **caractérisée en ce que** le monoalcényl-aromatique est un monomère du groupe formé par le styrène, l'a-méthylstyrène, le vinyltoluène, le tert-butylstyrène, l'o-chlorostyrène ou une combinaison de ceux-ci.

7. Dispersion selon l'une ou plusieurs des revendications 1 à 6, **caractérisée en ce que** le copolymère d'acrylate est constitué par les monomères styrène, acide acrylique et/ou acide méthacrylique.

8. Dispersion selon l'une ou plusieurs des revendications 1 à 7, **caractérisée en ce que** le rapport pondéral de l'agent ignifuge de formule (I) au copolymère d'acrylate est de 1:0,1 à 1:1.

9. Dispersion selon l'une ou plusieurs des revendications 1 à 8, **caractérisée en ce qu'**en outre un dispersant de formule (3)
R-O- (CH₂-CH₂-O)ₘ-CH₂-COOM (3),
où
R signifie un radical C₁₀-C₂₀-alkyle ou un radical C₁₀-C₂₀-alcényle,
m vaut un nombre de 1 à 15 et
M signifie un cation monovalent ;
et/ou du groupe des produits de polycondensation d'acide naphtalènesulfonique-formaldéhyde, et/ou du groupe des éthoxylates de tristyrylphénol, est contenu.

10. Dispersion selon l'une ou plusieurs des revendications 1 à 9, constituée par
a) 5 à 50% en poids d'agent ignifuge de formule (I),
b) 0,25 à 20% en poids du copolymère d'acrylate,
c) 0 à 12% en poids d'un composé de formule (3) et/ou du groupe des produits de polycondensation d'acide naphtalènesulfonique-formaldéhyde, et/ou du groupe des éthoxylates de tristyrylphénol ;
d) 5 à 60% en poids d'eau,
e) 0 à 15% en poids d'un agent de rétention,
g) 0 à 10% en poids d'autres additifs usuels,
dans chaque cas par rapport au poids total de la dispersion.

11. Dispersion selon l'une ou plusieurs des revendications 1 à 10, constituée par
a) 20 à 45% en poids d'agent ignifuge de formule (I),
b) 1 à 10% en poids du copolymère d'acrylate,
c) 1 à 12% en poids d'un composé de formule (3) et/ou du groupe des produits de polycondensation d'acide naphtalènesulfonique-formaldéhyde, et/ou du groupe des éthoxylates de tristyrylphénol ;
d) 10 à 40% en poids d'eau,
e) 5 à 9% en poids d'un agent de rétention,
g) 0,5 à 9,5% en poids d'autres additifs usuels,
dans chaque cas par rapport au poids total de la dispersion.

12. Procédé pour la préparation d'une dispersion selon l'une ou plusieurs des revendications 1 à 11, **caractérisé en ce qu'**on répartit finement l'agent ignifuge (a) dans une solution du copolymère d'acrylate (b) et le cas échéant les composants (c), (e) et/ou (g) à l'aide d'un appareil de dispersion en présence d'eau.

13. Utilisation d'une dispersion selon l'une ou plusieurs des revendications 1 à 11 pour l'apprêt ignifuge dans la masse ou un traitement de surface de matériaux cellulosiques, tels que les fibres discontinues, les filaments, les monofilaments, les non-tissés, les boyaux, le cellophane, les combinaisons de fibres cellulosiques et/ou animales, végétales et/ou synthétiques, ainsi que les fibres végétales, animales ou synthétiques.

14. Utilisation selon la revendication 13 pour l'apprêt d'un produit régénéré à base de cellulose.
